# FASCICULE DE BREVET EUROPEEN

(11) **EP 0 967 829 B1**
(45) Date de publication et mention de la délivrance du brevet: **06.08.2008**
(21) Numéro de dépôt: 99401529.5
(22) Date de dépôt: 21.06.1999
(51) Int. Cl.: H04Q 11/04, H04Q 3/62

(54) **Procédé de communication d'un accès avec canal de signalisation adjoint**
Kommunikationsverfahren eines Zugangs mit zugeordneten Signalisierungskanal
Communication method of an access with adjoint signalling channel

(30) Priorité: 25.06.1998 FR 9808066
(43) Date de publication de la demande: 29.12.1999
(73) Titulaire: Alcatel Lucent, 75008 Paris (FR)
(72) Inventeur: Laroque, Christian, 92500 Rueil Malmaison (FR); Bennai, Lahcen, 92700 Colombes (FR)
(74) Mandataire: Sciaux, Edmond

(56) Documents cités:
- EP-A- 0 171 596
- EP-A- 0 391 792
- EP-A- 0 667 723
- WO-A-98/24265
- US-A- 4 924 500
- US-A- 5 212 691
- US-A- 5 467 353

## Description

La présente invention a pour objet un procédé de communication avec un accès dans le domaine de la téléphonie, notamment un accès de type RNIS (Réseau Numérisé à Intégration de Services). L'invention vise plus particulièrement à mieux organiser les accès entre des autocommutateurs, notamment des autocommutateurs privés dits PABX (Private Automatic Branch eXchanger). L'invention a pour but d'améliorer leurs conditions de fonctionnement.

Dans le domaine de la téléphonie on connaît les accès normalisés selon la norme RNIS. Dans un exemple un accès primaire peut délivrer deux Méga bits d'informations numériques par seconde. Pour organiser ce débit, il est prévu de le répartir en 32 voies téléphoniques susceptibles d'acheminer par exemple chacune 64 Kilo bit par seconde. Dans un tel accès normalisé, dit T2 dans la norme RNIS, on distingue normalement trente voies de données, une voie de signalisation et une voie pour la maintenance. Dans la suite de cet exposé, on utilisera le terme de voie et le terme de canal. Une voie représentera le médium physique et fonctionnel qui permet de relier deux interlocuteurs. Un canal correspondra à l'utilisation physique d'une voie, en tout ou partie, éventuellement de plusieurs voies pour acheminer des messages sur une liaison téléphonique entre deux ou plusieurs interlocuteurs.

La signalisation est l'ensemble des informations qui sont nécessaires à un opérateur public, ou à des autocommutateurs privés, pour assurer la commutation des différentes voies de transmission mises progressivement en service le long d'un chemin de transmission pour permettre à un interlocuteur d'être connecté à un autre interlocuteur. La signalisation concerne par exemple l'envoi, au moment de l'établissement de l'appel, d'un message dit d'établissement. Ce message d'établissement comporte naturellement l'adresse de l'appelé (correspondant en pratique au numéro de téléphone de l'appelé), ainsi que, maintenant, de plus en plus d'informations de confort supplémentaires. Ces informations de confort supplémentaires peuvent concerner le nom de l'appelant, le numéro de téléphone de l'appelant, ainsi que des informations de service. Ces informations de service sont essentiellement des informations caractéristiques relatives à la nature du poste téléphonique utilisé pour lancer l'appel. Ces informations caractéristiques servent à donner des droits au poste appelant sur le poste distant, une fois qu'ils sont connectés. Ces droits peuvent être un accès à une boite vocale, la composition automatique d'un mot de passe, ou autre.

Dans l'état de la technique, la réalisation d'un accès comporte, une distribution des différentes voies, sur un même support physique. Ainsi dans l'exemple de l'accès T2, un faisceau de moyens identiques sera consacré à un accès. Soit, sur un canal à très grand débit (140 Mbits/s), l'accès sera concrétisé par une allocation d'une bande de fréquence, et/ou d'une fenêtre temporelle identifiée, susceptible de faire passer la tranche de 2 Mbits/s concédée. Soit sur un médium physique, des paires téléphoniques en nombre adéquat seront mises en service pour acheminer les informations de l'accès. Il résulte de ce choix que quand le support physique est en panne, avec un tel accès, plus aucune communication ne passe : pas plus des communications de données que les messages de signalisation ou les messages de maintenance.

Avec le perfectionnement des télécommunications, on a été amené à définir des accès dans lesquels les différents canaux utilisés, canaux B pour la voix et les données ou canaux D pour la signalisation et les données, sont réalisés sur des supports physiques différents. Par exemple, les uns peuvent être des lignes analogiques alors que les autres sont au format IP (Internet Protocol) ou au format X25. On observe dans ce cas une indépendance des canaux ou voies téléphoniques. Ces accès sont appelés accès à signalisation séparée ou accès hybrides. Le document US-A- 4.924.500 décrit un système de communication dans lequel les canaux de voix sont séparés des canaux de signalisation. Le document US-A-5.212.691 décrit un système de communication dans lequel on constitue des canaux virtuels de communication, et des canaux virtuels de signalisation, passant par un réseau public, et utilisables en cas de besoin.

Cependant, le problème présenté par la voie de signalisation séparée est que dans ce cas, si elle tombe en panne, plus aucune communication ne peut être établie. Or, la diversification des supports a justement pour but d'éviter un blocage massif d'une liaison entre deux autocommutateurs. On aboutit donc à un résultat inverse de celui recherché : l'accès devient moins résistant aux pannes alors qu'on cherchait justement à le rendre plus sûr.

L'invention remédie à ce problème en constituant des canaux de signalisation de secours et en créant, pour ces canaux de signalisation de secours, une hiérarchie d'utilisation : une priorité. Dans ces conditions, si un canal de signalisation n'est plus fonctionnel, on y substituera un autre canal, éventuellement d'une technologie différente, d'un coût de gestion éventuellement différent, d'une aptitude et d'un débit nominal éventuellement différents, mais présentant surtout l'intérêt de pouvoir se substituer au canal de signalisation déficient. De cette façon, on montre qu'on est capable de toujours utiliser au mieux les voies de données disponibles avec un accès.

L'invention a donc pour objet un procédé de communication dans lequel on utilise un accès comportant au moins un canal, dit canal B, pour transmettre la voix et des données et un canal de signalisation, dit canal D, pour transmettre des signaux de signalisation et de données, relatifs aux données à transmettre et ou à cet accès, caractérisé en ce que
- on constitue au moins un canal de signalisation supplémentaire,
- on détermine un ordre de priorité d'utilisation de ces canaux de signalisation, et
- on affecte à l'accès le canal de signalisation le plus prioritaire qui est fonctionnel.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- Figure 1 : une représentation schématique des moyens mis en oeuvre dans le procédé de communication de l'invention ;
- Figure 2 : une représentation d'opérations mises en oeuvre, à titre de perfectionnement, dans le procédé de l'invention.

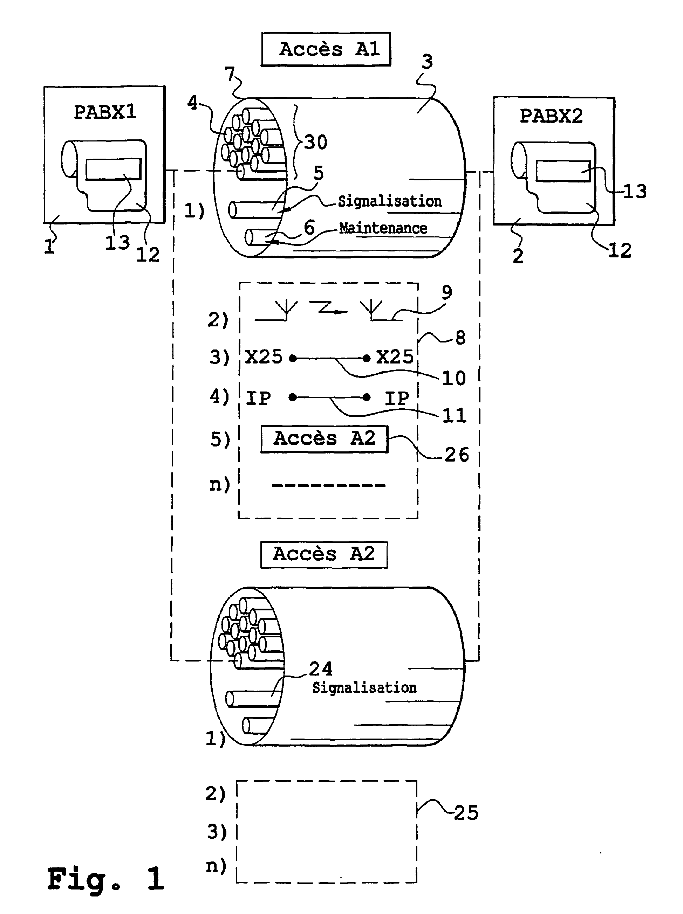

La figure 1 montre un ensemble de moyens utilisables pour mettre en oeuvre le procédé de l'invention. On y distingue un autocommutateur 1 dit PABX1 relié à un autre autocommutateur 2 dit PABX2 par un accès primaire 3. L'accès primaire 3 comporte au moins une voie 4 pour transmettre des données. Si l'accès 3, appelé aussi Accès A1, est un accès de type T2 selon la norme RNIS, il comporte même normalement trente voies de données tels que la voie 4. L'accès 3 comporte également une voie 5 de signalisation et une voie 6 de maintenance. Les voies 4, 5 et 6 comportent habituellement chacune un canal de transmission avec un débit nominal de 64 Kbits/s. Dans un exemple, les voies 4,5 et 6 sont constituées sous la forme d'une réservation en fréquence ou en temps dans un canal à très grand débit. Les interfaces d'échanges nécessaires à cette réservation sont comprises dans l'accès 3. Elles ne font pas partie de l'invention.

La représentation de l'accès 3 sous la forme d'un tube 7 suggère que la technologie des canaux 4, 5 et 6 soit la même. Ceci était le cas dans l'état de la technique. Cependant, il n'est pas nécessaire que cette technologie soit la même. Les canaux 4 pourraient selon l'invention avoir une technologie différente de celle des canaux 5 et 6. De même les canaux 4 entre eux pourraient être partagés selon des protocoles ou des technologies de types différents.

Le problème que cherche à résoudre l'invention est celui de la panne qui survient dans le canal 5 de signalisation. Dans ce cas, selon l'invention, on constitue au moins un canal de signalisation supplémentaire. Dans la pratique, on pourra même constituer un lot 8 de canaux de signalisation supplémentaires.

A titre uniquement illustratif, le lot 8 comporte un canal 9 de type hertzien, un canal 10 acheminé selon la norme X25, un canal 11 respectant le protocole Internet, ainsi que d'autres canaux que l'on verra plus loin. Les canaux 9, 10 et 11 sont ici représentés symboliquement. Dans la pratique, les autocommutateurs 1 et 2 sont reliés à des équipements qui permettent l'utilisation de ces canaux 9, 10 et 11. Dans les circuits de gestion de ces autocommutateurs 1 et 2, il existe des programmes 12 qui comportent notamment des sous programmes 13 relatifs à la gestion ou à l'acheminement des messages de signalisation.

L'invention a pour objet de modifier les sous programme 13 de manière à remédier à la panne du canal de signalisation 5.

Comme premier principe du sous programme 13, on constitue parmi le lot 8 des canaux de signalisation supplémentaires, une hiérarchie. On détermine des priorités. Ainsi, autant le canal 5 sera le canal de signalisation le plus prioritaire, autant on aura pu prévoir dans le sous programme 13 que le canal 9 devra s'y substituer si le canal 1 est en panne. Ou encore, le canal 10 devra se substituer au canal 9 si ce dernier est en panne et si, en même temps, le canal 5 est en panne. Il en serait de même pour le canal 11, il faut que les 3 précédents soient en panne.

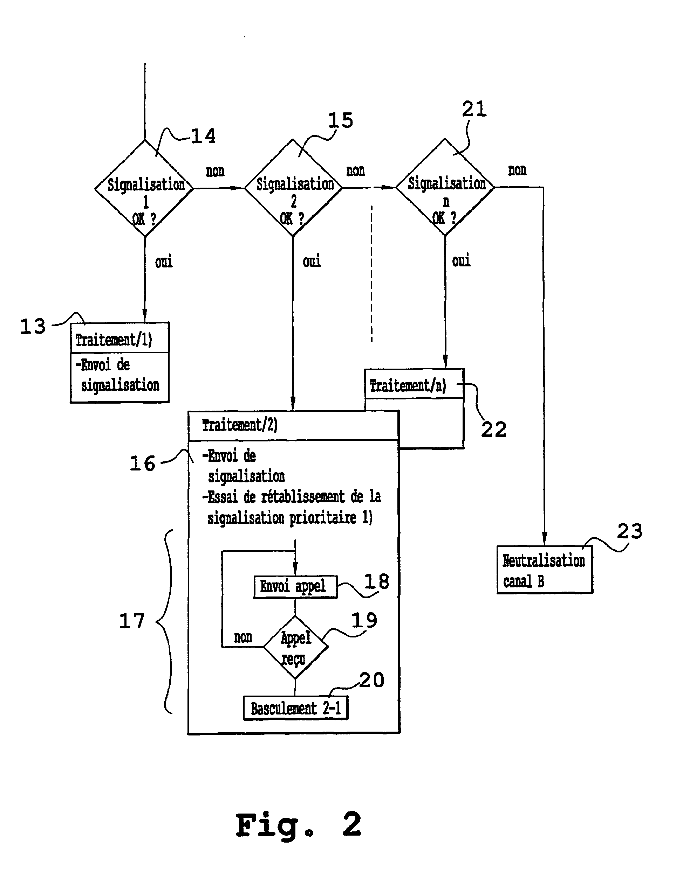

La figure 2 montre d'une manière schématique, le contenu modifié du sous programme 13. Celui-ci comportera en effet un ensemble de fonctions supplémentaires par rapport aux fonctions habituelles. Dans ces fonctions supplémentaires, il comportera un test 14, utilisé par exemple préalablement à l'acheminement d'un nouvel appel, ou de la modification d'un appel ancien (modification du taux de transfert, mise en attente). Le test 14 vérifie que le canal de signalisation 5, ayant le degré de priorité n°1, est fonctionnel. S'il est fonctionnel, le test 14 fait exécuter la suite du sous programme 13 par ce canal de signalisation 5. Tout simplement, il lui fait envoyer les signaux de signalisation correspondant à la communication à établir ou à modifier. Ce dernier fonctionnement est de type connu. Seul le test 14 a été ajouté.

Si ce n'est pas le cas, avec un test 15, on regarde si le canal 9, dont le rang de priorité est 2, est fonctionnel. Si celui-ci est fonctionnel, on lui fait exécuter la suite des traitements du sous programme 13 : c'est à dire comme précédemment un envoi 16 de la signalisation relative à l'appel à établir ou à modifier. Dans l'invention néanmoins, s'agissant d'un canal de signalisation de remplacement, on cherchera à lui faire tester le rétablissement de la signalisation sur le canal prioritaire de rang 1 : le canal de signalisation 5. Par exemple, au cours d'un ensemble d'étapes 17 consécutives à l'envoi 16, le sous programme 13 enverra un appel, en une étape 18, sur le canal 9 pour faire ouvrir le canal 5. Au cours d'un test consécutif 19, le sous programme 13 vérifiera que cet appel est reçu et que le canal 5 a pu être réouvert, qu'il a été rétabli.

Si ce n'est pas le cas, l'envoi d'appel 18 est réitéré. La périodicité de la réitération peut bien entendu être modifiée à la demande. Eventuellement cette réitération comporte une attente.

Par contre, si l'appel d'ouverture du canal 5 est reçu, l'ensemble des étapes 17 se termine par une étape 20 au cours de laquelle on provoque le basculement de l'utilisation du canal de signalisation prioritaire de rang 2, au canal de signalisation plus prioritaire de rang 1.

Ainsi de suite, on organisera différents tests 21 jusqu'à arriver à mettre en oeuvre un dernier canal de signalisation de rang de priorité n. Si ce dernier canal de signalisation de rang n est le seul valide, on lancera dans le sous programme 13 des opérations 22 du même type que les opérations 16 à 20. Cependant, d'une part on pourra prévoir que des essais de rétablissement, par le canal de signalisation de rang prioritaire n s'effectuent au profit du canal de signalisation de rang prioritaire n-1. Dans ce cas, on ne remontera que petit à petit jusqu'au canal prioritaire de rang 1. Et on y remontera seulement si tous les canaux de signalisation prévus sont fonctionnels. Pour éviter cette remontée qui peut être laborieuse, on peut prévoir que les tests effectués par le programme 22 visent non seulement le canal prioritaire de rang n-1, mais vise prioritairement le canal prioritaire de rang 1 et ainsi de suite jusqu'au canal prioritaire de rang n-1 lui-même.

Les tests sur l'état des canaux de signalisation ne sont pas nécessairement réalisés à chaque nouvel appel, ou à chaque fois que l'on veut faire passer des messages de signalisation. Un automate de signalisation est de préférence chargé de la gestion des canaux de signalisation. Cet automate indique à un instant t quel est le canal de signalisation qui doit être utilisé. Les différents tests décrits dans la figure 2 ne sont éxécutés de préférence que losqu'il y a un changement de l'état d'un canal de signalisation. De même, l'essai de rétablissement des canaux de signalisation de priorité de rang supérieur ne s'effectue pas tout le temps, mais uniquement sur demande de l'automate de signalisation. Pour cela, l'automate utilise des temporisations.

D'autre part, il peut apparaître qu'un canal de signalisation de secours ne possède qu'un débit insuffisant pour acheminer toutes les communications de signalisation relatives à l'Accès A1. Dans ce cas, on pourra, plutôt que de constater cet échec et de mettre en panne tout l'accès, autoriser un fonctionnement dégradé de l'Accès A1. Ce fonctionnement dégradé est obtenu en neutralisant un ou plusieurs canaux B parmi les canaux B qui doivent être gérés par le canal de signalisation. Autrement dit, si le seul canal de signalisation encore fonctionnel (le canal n) est incapable de gérer toutes les transmissions de signaux de signalisation, on provoquera par une opération 23 la neutralisation de certains canaux B. Ces canaux B ne pourront pas servir pour établir des communications téléphoniques nouvelles, ou ne pourront pas servir pour modifier une communication déjà établie.

Sur la figure 1, on a représenté entre l'autocommutateur 1 et l'autocommutateur 2, un autre accès, l'Accès A2. Cet Accès A2 est constitué de la même façon que l'Accès A1 avec des canaux de type B et notamment un canal 24 de signalisation propre à cet accès. Conformément à l'invention, l'Accès A2 peut également être muni d'un ensemble 25 de canaux de signalisation de secours utilisables en cas de panne de l'accès 24.

La figure 1 montre par ailleurs, que l'ensemble 8 des canaux de signalisation de secours de l'accès 3, comporte en fait, une désignation 26 d'un canal dit Accès A2 présenté en cinquième rang de priorité (mais bien entendu, il pourrait avoir un autre rang). Ceci signifie en fait qu'on utilisera pour suppléer à la déficience du canal de signalisation 5, l'existence du canal de signalisation 24. Dans ce cas, par ce canal de signalisation 24, passent la signalisation relative aux trente voies de type B de l'Accès A1 et la signalisation relative aux trente voies de type B de l'Accès A2. Dans ce cas, sur la voie 24, il y aura deux canaux de signalisation. On peut prévoir tout système de partage de cette voie entre deux canaux. Une répartition temporelle alternative peut être envisagée. Une distribution fréquentielle peut l'être aussi, notamment si le canal 24 est du type hertzien comme le canal 9.

Hormis le contexte de panne du canal 5 évoqué ci-dessus, cette dernière manière de faire a comme intérêt de mettre à la disposition des autocommutateurs 1 et 2, une voie de transmission supplémentaire : la voie 5. En effet, la voie 5 était normalement utilisée comme canal de signalisation de l'Accès A1. Il suffit, pour atteindre cette libération d'une voie supplémentaire, de déclarer dans le sous programme 13, le canal 5 comme utilisable, comme un canal B, pour la voix et non pas au titre de la transmission des signaux de signalisation. Dans ce cas, le canal 24 pourra être utilisé en remplacement systématiquement. Comme les canaux de signalisation sont d'une manière générale globalement surdimensionnés, le canal 24 sera capable d'assurer la transmission des signaux de signalisation relative aux canaux B de l'Accès A1 et de l'Accès A2. On pourra alors utiliser le canal 5 tout simplement comme un canal B supplémentaire : on a augmenté d'environ 1/60 le débit utile des accès mis à disposition des deux autocommutateurs. Bien entendu ce procédé est reproductible à la mise en commun, sur une même voie de signalisation, des canaux de signalisation propres à trois accès, voire plus.

Avec la solution de l'invention, du fait de la séparation des supports physiques utilisables pour véhiculer des données sur les différents canaux mis à disposition, la notion de canal de signalisation perd son caractère dédié au profit d'une notion plus fonctionnelle. Ainsi, il serait même envisageable d'utiliser un des canaux 4 de type B de l'accès 1 pour servir de canal de signalisation en remplacement du canal de signalisation 5 de ce même accès. Les Accès A1 et A2 seront dans le futur des accès de type hybrides, en ce sens que les différents canaux ne seront pas supportés par des mêmes supports physiques.

La procédure de basculement 20 pourrait impliquer, dans les autocommutateurs 1 et 2 que ceux-ci établissent automatiquement, et spontanément la liaison de signalisation sur un canal de secours dès qu'un canal plus prioritaire n'est plus fonctionnel. Au besoin cet établissement pourra comporter une intervention humaine.

On a indiqué jusqu'ici que les canaux de signalisation se substituaient hiérarchiquement les uns aux autres. Il est cependant envisageable de remplacer un canal 5 de signalisation qui tombe en panne par un canal 9 qui se substituerait à lui, et en complément, si le débit utile du canal 9 est insuffisant, par un canal 10 qui viendrait compléter le débit utile du canal 9. Cette manière de faire serait une alternative à l'opération 23 par laquelle on neutraliserait tout simplement un des canaux B de l'accès.

Selon l'invention, il est donc possible d'avoir plusieurs canaux de signalisation établis en même temps (des canaux de signalisation d'égale priorité). Ainsi, lors de la coupure d'un canal de signalisation, il y a basculement automatique d'un canal sur un autre, sans aucune perte de signalisation. Il est également possible d'avoir plusieurs canaux de signalisation non établis en même temps (afin de limiter les coûts). Lors de la coupure d'un canal de signalisation, il y a basculement automatique d'un canal sur un autre, avec éventuellement perte de signalisation pendant le temps d'établissement du canal. Mais les communications déjà établies dans les canaux de type B ne sont pas coupées. Il est également possible d'utiliser des canaux de signalisation en fonction de leur coût d'utilisation. La notion de priorité évoquée permet par ailleurs de minimiser le coût global d'un accès hybride ainsi constitué.

Dans le cas où on utiliserait un même canal de signalisation pour deux accès, l'Accès A1 et l'Accès A2, le contrôle de flux est réalisé sur le canal de signalisation, afin de limiter dynamiquement le nombre de voies si besoin est. Ce contrôle de flux, aboutissant éventuellement dans la neutralisation 23, est particulièrement justifié si un seul canal de signalisation 24 gère les canaux de communication de deux accès. S'il y a engorgement du canal de signalisation, le sous programme 13 contrôlant le canal de signalisation limite dynamiquement le nombre de voies : les voies non encore utilisés sont temporairement mis hors service et les nouvelles communications se présentant sont refusées. Lorsque le canal de signalisation est désengorgé, les voies mises hors service sont dynamiquement remises en service.

## Revendications

1. Procédé de communication dans lequel on utilise un accès (3) comportant au moins un canal (4), dit canal B, pour transmettre la voix et des premières données et un canal (5) de signalisation, dit canal D, pour transmettre des signaux de signalisation et de deuxièmes données, relatifs aux premières données à transmettre et ou à cet accès, **caractérisé en ce que**
- on constitue au moins (9-11) un canal de signalisation supplémentaire,
- on détermine (14, 15) un ordre de priorité d'utilisation de ces canaux de signalisation, et
- on affecte à l'accès le canal de signalisation le plus prioritaire qui est fonctionnel.

2. Procédé selon la revendication 1, **caractérisé en ce que** le canal B pour transmettre la voix et les premières données est réalisé sur un support physique différent d'au moins un des canaux D (5, 9, 10) de signalisation.

3. Procédé selon l'une des revendications 1 à 2, **caractérisé en ce qu'**on teste (17) régulièrement l'état de fonctionnement du canal D de signalisation le plus prioritaire quand ce dernier n'est pas en service.

4. Procédé selon l'une des revendications 1 à 3, **caractérisé en ce que**
- on neutralise (23) l'utilisation d'un ou de plusieurs canaux B lorsque le canal D de signalisation en service n'est plus suffisamment fonctionnel.

5. Procédé selon l'une des revendications 1 à 4, **caractérisé en ce qu'**on aménage trente canaux B dans un accès.

6. Procédé selon l'une des revendications 1 à 2, **caractérisé en ce qu'**on constitue comme canal D supplémentaire un canal (26) aménagé dans une voie de signalisation d'un autre accès.

## Claims

1. A communication method using an access (3) including at least one B channel (4) for transmitting voice and first data and one D channel (5) for transmitting signaling signals and second data relating to the first data to be transmitted and/or to said access, **characterized in that**:
- at least one additional signaling channel is constituted (9-11),
- an order of priority of the use of the signaling channels is determined (14, 15), and
- the highest priority functional signaling channel is assigned to the access.

2. A method according to claim 1, **characterized in that** the B channel for transmitting voice and first data is on a different physical medium to at least one of the D channels (5, 9, 10).

3. A method according to either claim 1 or claim 2, **characterized in that** the operational status of the highest priority signaling D channel is regularly tested (17) when said channel is not in service.

4. A method according to any one of claims 1 to 3, **characterized in that** the use of one or more B channels is neutralized (23) if the D channel in service is not sufficiently functional.

5. A method according to any one of claims 1 to 4, **characterized in that** an access provides thirty B channels.

6. A method according to either claim 1 or claim 2, **characterized in that** a channel (26) formed in a signaling path of another access is constituted as an additional D channel.

## Patentansprüche

1. Kommunikationsverfahren, in welchem man einen Zugang (3) benutzt, welcher mindestens einen Kanal (4), den sogenannten B-Kanal, zur Übertragung von Sprache und der ersten Daten, und einen Signalisationskanal (5), den sogenannten D-Kanal, zur Übertragung von Signalisierungssignalen und Signalen der zweiten Daten, welche die ersten zu übertragenden Daten und/oder diesen Zugang betreffen, umfasst, **dadurch gekennzeichnet, dass** man
- mindestens (9-11) einen zusätzlichen Signalisierungskanal bildet,
- eine Rangordnung für die Nutzung dieser Signalisierungskanäle bestimmt (14, 15), und
- dem Zugang den funktionsfähigen Signalisierungskanal, der den größten Vorrang hat, zuweist.

2. Verfahren nach Anspruch 1, **dadurch gekennzeichnet, dass** der B-Kanal zur Übertragung der Sprache und der ersten Daten auf einem mindestens von einem der D-Kanäle (5, 9, 10) getrennten physikalischen Träger eingerichtet ist.

3. Verfahren nach einem der Ansprüche 1 bis 2, **dadurch gekennzeichnet, dass** man regelmäßig den betriebsbereiten Zustand des vorrangigsten D-Signalisierungskanals testet (17), wenn letzterer nicht in Betrieb ist.

4. Verfahren nach einem der Ansprüche 1 bis 3, **dadurch gekennzeichnet, dass** man
- die Nutzung von einem oder mehreren der B-Kanäle neutralisiert (23), wenn der sich in Betrieb befindende D-Signalisierungskanal nicht mehr ausreichend funktionsfähig ist.

5. Verfahren nach einem der Ansprüche 1 bis 4, **dadurch gekennzeichnet, dass** man dreißig B-Kanäle in einem Zugang einrichtet.

6. Verfahren nach einem der Ansprüche 1 bis 2, **dadurch gekennzeichnet, dass** man einen in einem Signalisierungsweg eines anderen Zugangs eingerichteten Kanal (26) als zusätzlichen D-Kanal anlegt.
